(19) Europäisches Patentamt
European Patent Office
Office européen des brevets

(11) Veröffentlichungsnummer: **0 497 132 A1**

(12) # EUROPÄISCHE PATENTANMELDUNG

(21) Anmeldenummer: **92100481.8**

(22) Anmeldetag: **14.01.92**

(51) Int. Cl.5: **G02B 1/04**, G02B 6/16, C08G 77/14

(30) Priorität: **26.01.91 DE 4102340**

(43) Veröffentlichungstag der Anmeldung: **05.08.92 Patentblatt 92/32**

(84) Benannte Vertragsstaaten: **BE CH DE FR GB LI**

(71) Anmelder: **BAYER AG**

**W-5090 Leverkusen 1 Bayerwerk(DE)**

(72) Erfinder: **Brandt, Heinz-Dieter, Dr.**
**Buschstrasse 169**
**W-4150 Krefeld(DE)**
Erfinder: **Ebert, Wolfgang, Dr.**
**Dörperhofstrasse 31**
**W-4150 Krefeld(DE)**
Erfinder: **Wolf, Udo, Dr.**
**Uerdinger Strasse 469**
**W-4150 Krefeld(DE)**
Erfinder: **Cramer, Wilfried, Dr.**
**Roonstrasse 56**
**W-4150 Krefeld(DE)**

(54) **Lichtleitfasern und Verfahren zu ihrer Herstellung.**

(57) Es werden Lichtleitfasern und ein Verfahren zu ihrer Herstellung beschrieben, die aus einer schlauchförmigen Kunststoffhülle und einem Kern aus einem Polymer bestehen, dessen Brechungsindex mindestens 1 % größer ist als der des Hüllenmaterials. Der Kern wird aus einer polymerisierbaren Mischung erhalten, die aus Epoxygruppen aufweisenden Verbindungen besteht, von denen mindestens 10 Gew,-% Epoxygruppen aufweisende Siloxane sind.

EP 0 497 132 A1

Die vorliegende Erfindung betrifft Lichtleitfasern (Lichtwellenleiter LWL) mit einer verbesserten Temperaturbeständigkeit sowie ein Verfahren zu ihrer Herstellung. Die erfindungsgemäßen Lichtleitfasern werden aus einer polymerisierbaren Mischung erhalten, die aus Epoxygruppen aufweisenden Verbindungen besteht, von denen mindestens 10 Gew.-% Epoxygruppen aufweisende Siloxane sind.

Lichtwellenleiter sind Medien für die Informationsübertragung.

Es gibt seit längerer Zeit Lichtwellenleiter auf der Basis von Silikatglas. Solche Lichtleitfasern zeichnen sich durch eine sehr geringe Dämpfung und damit eine hohe Reserve zur sicheren Informationsübertragung und durch eine hohe Dauergebrauchstemperatur aus. Nachteilig an solchen Silikatglasfasern sind jedoch die nicht ausreichende Flexibilität, die hohen Kosten der Herstellung eines erforderlichen hochreinen Glases sowie die aufwendige Endflächenpräparation und Endflächenankopplung.

Aus diesen Gründen wurden in der letzten Zeit Lichtwellenleiter auf der Basis organischer Polymerer entwickelt, welche sich durch eine ausgezeichnete Flexibilität, durch ein niedrigeres Gewicht, durch relativ niedrige Herstellungskosten und einfachere Ankopplungsmöglichkeiten auszeichnen.

So werden Lichtleitfasern beschrieben (DE-OS 24 55 265; JP-B 78/42 261), die aus hochtransparenten und amorphen Polymeren, wie Polymethylmethacrylat (PMMA), Polystyrol (PS) oder Polycarbonat (PC) hergestellt werden. Die Herstellung der Lichtleitfasern geschieht durch Aufschmelzen des Polymers und Formung, beispielsweise durch Extrusion. Solche Fasern können weiterhin mit einer Außenhaut versehen werden, beispielsweise durch Coextrusion oder durch Beschichtung.

Für die Herstellungsweise durch Schmelzformen müssen die eingesetzten Polymere eine ausgezeichnete Schmelzformbarkeit besitzen. Daher scheiden solche Polymere als Kernmaterialien aus, die bei den für das Schmelzformen erforderlichen hohen Temperaturen instabil sind oder die hohe Molekulargewichte und somit hohe Schmelzviskositäten besitzen oder die eine vernetzte Struktur aufweisen.

Beim Schmelzformprozeß werden weiterhin die Polymere hohen Temperaturen und hohen Scherkräften ausgesetzt. Dadurch kann sich, beispielsweise durch Polymerabbau, die Qualität verschlechtern oder modifizieren, so daß ein Teil der Transparenz verlorengeht. Weiterhin ist bei dem Schmelzformprozeß die Gefahr einer Verunreinigung, beispielsweise von äußeren Quellen, nicht ausreichend auszuschließen.

Lichtleitfasern auf der Basis von PMMA und PS können mit niedrigen Dämpfungen hergestellt werden. Ihre Temperaturbeständigkeit ist jedoch für viele Einsatzzwecke, besonders im Maschinen- und Automobilbereich, ungenügend. Lichtwellenleiter mit PC als Kernmaterial zeigen zwar eine höhere Temperaturbeständigkeit, jedoch ist ihre Dämpfung aufgrund chemischer struktureller Beiträge relativ hoch. Für den genannten Anwendungsbereich werden nun polymere Kunststoffe zur Herstellung von Lichtleitfasern gesucht, die bei ausreichend hoher Transparenz (= niedrige Dämpfung) eine ausreichend hohe Temperaturbeständigkeit haben. Aus den dargelegten Gründen können thermoplastische Polymere aufgrund ihrer zu niedrigen Glastemperatur diese Lücke nicht schließen.

Es sind jedoch auch Lichtleitfasern und deren Herstellungsverfahren beschrieben, bei denen radikalisch polymerisierbare, ethylenisch ungesättigte Verbindungen benutzt werden (DE-PS 36 25 180). Solche Lichtleiter besitzen gegenüber den oben beschriebenen den Vorteil, daß sie aus niedermolekularen Stoffen aufgebaut werden. Diese Ausgangsverbindungen lassen sich, beispielsweise durch Destillation, in optisch höchster Reinheit herstellen. Im allgemeinen werden nicht nur monofunktionelle, sondern auch difunktionelle oder polyfunktionelle, ethylenisch ungesättigte, radikalisch polymerisierbare Verbindungen eingesetzt.

Solche Mischungen, die einen gewissen Anteil eines Vernetzers enthalten, zeichnen sich nach der vernetzenden Polymerisation durch eine erhöhte Temperaturbeständigkeit aus. Zur Herstellung wird die radikalisch polymerisierbare Monomermischung unter Zusatz eines Polymerisationsinhibitors in das Mantelmaterial hineingefüllt und anschließend geeigneten Polymerisationsbedingungen ausgesetzt. Das kernbildende Polymer bzw. Copolymer wird somit in dieser Kunststoffhülle ausgebildet.

Es wurden neue Lichtleitfasern gefunden, die auf der Basis von Epoxygruppen aufweisenden Siloxanen hergestellt werden und die in hervorragender Weise die Eigenschaften einer hohen Transparenz und einer hohen Temperaturbeständigkeit vereinen.

Die Erfindung betrifft eine Lichtleitfaser mit einer schlauchförmigen Kunststoffhülle und einem Kern aus einem Polymer, dessen Brechungsindex mindestens 1 % größer ist als der des Hüllenmaterials und der aus einer polymerisierbaren Mischung erhalten wird, die dadurch gekennzeichnet ist, daß die polymerisierbare Mischung aus Epoxygruppen aufweisenden Verbindungen besteht, von denen mindestens 10 Gew,-%, bevorzugt mindestens 50 Gew.-%, besonders bevorzugt mindestens 80 Gew.-% Epoxygruppen aufweisende Siloxane sind.

Die Erfindung betrifft ferner ein Verfahren zur Herstellung einer Lichtleitfaser der beschriebenen Art, das dadurch gekennzeichnet ist, daß die polymerisierbare Mischung in die schlauchförmige Kunststoffhülle gefüllt und darin polymerisiert wird.

Epoxygruppen aufweisende Siloxane für die erfindungsgemäßen Lichtleitfasern weisen 2 bis 20 Si-Atome auf und sind herstellbar durch Reaktion von Siloxan-Hydriden mit olefinisch ungesättigten Verbindungen, die Epoxygruppen enthalten. Siloxan-Hydride enthalten hierbei eine oder mehrere Struktureinheiten der folgenden Aufzählung:

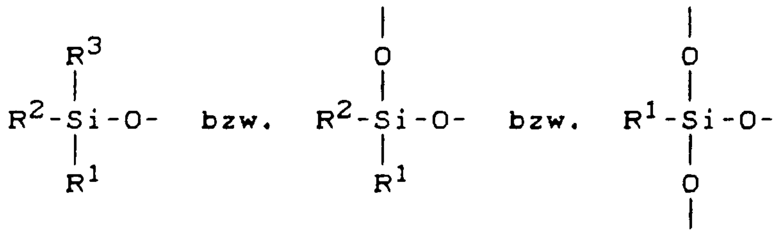
bzw. bzw.
(I),

worin

R[1], R[2] und R[3] unabhängig voneinander Wasserstoff, $C_1$-$c_5$-Alkyl oder Phenyl bedeuten, mit der Maßgabe, daß an einem Si-Atom mindestens einer der Reste R[1], R[2] und R[3] für Wasserstoff steht.

$C_1$-$C_5$-Alkyl ist beispielsweise Methyl, Ethyl, Propyl, Isopropyl, Butyl, Isobutyl oder Pentyl, in bevorzugter Weise Methyl oder Ethyl. Phenyl kann auch substituiertes Phenyl sein; als Substituenten kommen $C_1$-$C_4$-Alkyl und/oder $C_1$-$C_4$-Alkoxy, beispielsweise Methoxy, Ethoxy, Propoxy, Isopropoxy, Butoxy, Isobutoxy, in Frage.

Die Reaktion eines solchen Siloxan-Hydrids zum Epoxygruppen aufweisenden Siloxan läßt sich durch die folgende Formelgleichung darstellen:

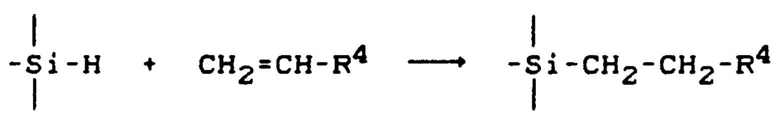
(II),

worin

$CH_2$ = CH-R[4] eine vinyl- oder allylfunktionalisierte Epoxyverbindung darstellt`

Solche vinyl- oder allylfunktionalisierten Epoxyverbindungen sind beispielsweise Allyl-glycidylether, Glycidylacrylat, Vinyl-norbornen-monoxid, Dicyclopentadienoxid, 4-Vinyl-cyclohexenoxid und andere. R[4] nimmt in solchen Verbindungen die Bedeutung $(-CH_2)_n$-X-glycidyl mit n = Null oder Eins und X = -O- oder -COO- oder die Bedeutung eines epoxidierten Vinylnorbornens, Dicyclopentadiens oder Vinylcyclohexens an. Vinyl- oder allylfunktionalisierte Epoxyverbindungen der genannten Art lassen sich beispielhaft folgendermaßen in Formeln darstellen:

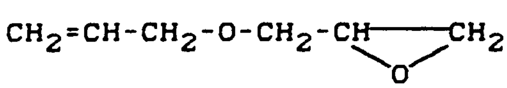

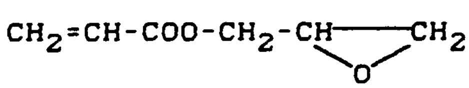

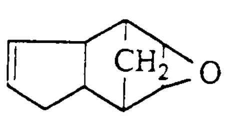
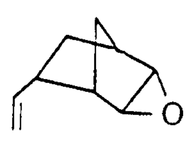
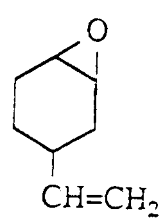

Für die Herstellung der erfindungsgemäßen Lichtleitfasern sollen die Epoxygruppen aufweisenden Siloxane 2 bis 40 Gew.-% Epoxygruppen, bevorzugt 3 bis 25 Gew.-% Epoxygruppen, bezogen auf das Gesamtgewicht der Epoxygruppen aufweisenden Siloxane, haben.

Die erfindungsgemäß einsetzbaren Epoxygruppen aufweisenden Siloxane sind bekannt (US 4.576.999; US 4.279.717). Die zur Herstellung des erfindungsgemäßen Lichtleiters erforderliche polymerisierbare

Mischung kann zu 100 Gew.-% aus solchen Epoxygruppen aufweisenden Siloxanen bestehen. Die polymerisierbare Mischung besteht jedoch erfindungsgemäß mindestens zu 10 Gew.-%, bevorzugt mindestens zu 50 Gew.-% und besonders bevorzugt zu mindestens 80 Gew.-% aus solchen Epoxygruppen aufweisenden Polysiloxanen.

Neben diesen Epoxygruppen aufweisenden Siloxanen können auch andere Epoxygruppen aufweisende Verbindungen in der polymerisierbaren Mischung enthalten sein. Geeignete Verbindungen dieser Art enthalten beispielsweise Cyclohexenoxidgruppen, wie Epoxy-cyclohexancarboxylate, beispielsweise 3,4-Epoxy-cyclohexylmethyl-3,4-epoxy-cyclohexancarboxylat, 3,4-Epoxy-2-methylcyclohexylmethyl-3,4-epoxy-2-methylcyclohexancarboxylat, Bis-(3,4-epoxy-6-methylcyclohexylmethyl)-adipat. Solche Epoxidgruppenhaltige Verbindungen sind in US 3.117.099 beschrieben.

Weitere Epoxygruppen enthaltende Verbindungen, die sich erfindungsgemäß eignen, sind monomere Glycidylether der allgemeinen Formel

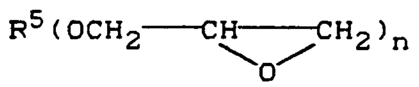 (III),

worin

$R^5$ einen n-wertigen Rest eines aliphatischen Kohlenwasserstoffes mit 1-15 C-Atomen oder eines eine aromatische Gruppe enthaltenden Kohlenwasserstoffes mit 6-36 C-Atomen und

n eine ganze Zahl von 1 bis 6 bedeuten.

Aliphatische Kohlenwasserstoffe mit 1-15 C-Atomen sind beispielsweise Methan, Ethan, Propan, Butan, Isobutan, die isomeren Pentane, Hexane, Octane, Decane, Dodecane, Pentadekane.

Eine aromatische Gruppe enthaltende Kohlenwasserstoffe mit 6-36 C-Atomen sind beispielsweise solche der Formel

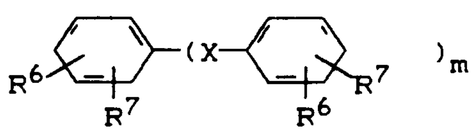 (IV),

in der

m für Null, Eins oder Zwei, bevorzugt Null oder Eins,

X für $C_1$-$C_6$-Alkyliden oder $C_3$-$C_{10}$-Cycloalkyliden, aber auch für die Heteroatome enthaltenden Gruppen -O-, -S-, $-SO_2-$ oder -CO- steht und

$R^6$ und $R^7$ unabhängig voneinander für Chlor, Brom, Methyl oder Ethyl stehen.

$C_1$-$C_6$-Alkyliden ist beispielsweise Methylen, Ethyliden, 1,1- oder2,2-Propyliden und homologes Butyliden, Pentyliden oder Hexyliden.

$C_3$-$C_{10}$-Cycloalkyliden ist beispielsweise Cyclopropyliden, Cyclobutyliden, Cyclopentyliden, Cyclohexyliden, Cycloheptyliden, Cyclooctyliden und deren ein- oder mehrfach durch Methyl oder Ethyl substituierte Abkömmlinge, wie 3,5,5-Trimethyl-cyclohexyl(2)-yliden (1,1) (Isophoronyliden).

Beispiele für derartige Epoxide, die ebenfalls erfindungsgemäß eingesetzt werden können, sind in US 3.018.262 und in "Handbook of Epoxy Resins", Lee und Neville, McGraw-Hill Book Co., New York (1967) beschrieben und umfassen Glycidylether von mehrwertigen Phenolen, die durch Umsetzung eines mehrwertigen Phenols mit einem Überschuß eines Chlorhydrins, wie Epichlorhydrin, erhalten werden. Ein wichtiges Beispiel hierfür ist der Diglycidylether des 2,2-Bis-(2,3-epoxy-propoxy-phenol)-propans.

Weitere Epoxidgruppen enthaltende Verbindungen, die in den erfindungsgemäßen Gemischen eingesetzt werden können, sind beispielsweise Octadecylenoxid, Epichlorhydrin, Styroloxid, Glycid, Bis-(2,3-epoxycyclopentyl)-ether, Dipentendioxid, Vinylcyclohexenoxid.

Desweiteren können diese Epoxygruppen aufweisenden Verbindungen teilweise durch mit dem Epoxid copolymerisierbare, Hydroxylgruppen aufweisende Verbindungen ersetzt sein. Die Hydroxylfunktionalität beträgt mindestens 1, bevorzugt mindestens 2 und kann bis 10 erreichen. Solche Hydroxylgruppen aufweisenden organischen Verbindungen können flüssig oder fest sein. Beispiele hierfür sind: Alkanole, Alkylether von Polyoxyalkylenglycolen, Alkylenglycole, Polyhydroxyverbindungen. Spezielle Beispiele sind: 1,2-Ethandiol, 1,2- und 1,3-Propandiol, Diethylenglycol, Triethylenglycol, 1,2-, 1,3-, 2,3- und 1,4-Butandiol, 2-Ethyl-1,6-hexandiol, Bis-(hydroxymethyl)-cyclohexan, 1,18-Dihydroxyoctadecan, 3-Chlor-1,2-propandiol, Glycerin, Trimethylolpropan, Pentaerythrit, Sorbit, Polyoxypropylenglycole bzw. Polyoxyethylenglycole bzw.

Polyoxytetramethylenglycole mit Molekulargewichten von 200 bis etwa 10000.

Die Menge der Hydroxylgruppen enthaltenden Verbindungen in den erfindungsgemäßen Gemischen hängt von mehreren Faktoren ab, beispielsweise der Verträglichkeit dieser Verbindungen mit den Epoxiden oder dem Äquivalentgewicht und der Funktionalität der Hydroxylgruppen enthaltenden Verbindungen oder von den gewünschten physikalischen Eigenschaften des am Ende gehärteten Gemisches oder der gewünschten Geschwindigkeit der Photohärtung.

Zur Polymerisation der polymerisierbaren Mischung werden Initiatoren eingesetzt, die Epoxide polymerisieren können. Geeignete Initiatoren sind beispielsweise solche, die unter UV-Bestrahlung eine Lewis-Säure freisetzen, die die Polymerisation der Epoxygruppen einleiten kann. Solche Photoinitiatoren sind bekannt und können in bekannter Weise hergestellt werden (J. Am. Chem. Soc. 91 (1969), 145; J. Org. Chem. 35 (1970), 2532; US 2.807.648; Bull. Soc. Chim. Belg. 73 (1964), 546; J. Am. Chem. Soc. 51 (1929), 2587).

Erfindungsgemäß einsetzbare Photokatalysatoren gehören zur Klasse der Onium-Salze und können in drei Gruppen eingeteilt werden, nämlich in die Halonium-Photoinitiatoren, in die Onium-Photokatalysatoren mit Elementen der Gruppe VIa des Periodensystems der Elemente, beispielsweise in die Sulfonium-Photoinitiatoren, und schließlich in die Phosphonium-Photoinitiatoren. Oniumsalze der genannten Art als Photoinitiatoren sind bekannt, beispielsweise aus US 4.026.707, US 3.981.897 und US 4.069.055. Typische und häufig eingesetzte Vertreter sind beispielsweise:

$Ph_3S^{\oplus}PF_6^{\ominus}$, $Ph_3S^{\oplus}SbF_6^{\ominus}$,

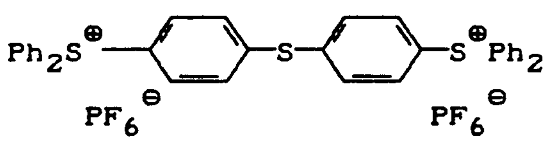

Zur Steigerung der Effektivität der genannten Photoinitiatoren können Sensibilisatoren verwendet werden, die aus Kirk-Othmer, Encyclopedia, Vol. 2, S. 194-197, 2. Auflage, John Wiley & Sons (1965) bekannt sind. Typische Beispiele hierfür sind: 4,4'-(Bis-dimethylamino)-benzophenon, Benzoflavin, Thioxanthon, Aminoxanthene, Acridin-Gelb.

Die Einsatzmaterialien, nämlich die Epoxygruppen aufweisenden Siloxane und die gegebenenfalls mitverwendeten Epoxygruppen aufweisenden Comonomeren bzw. Hydroxygruppen aufweisenden Comonomeren, sowie die Photo-initiatoren und gegebenenfalls die Sensibilisatoren, werden zunächst nach üblichen Methoden, wie Destillation, Feinstfiltration oder Kristallisation in hochreiner Form hergestellt, wie es dem erfindungsgemäßen Einsatz zu optischen Zwecken angemessen ist. Danach werden diese Einsatzmaterialien miteinander gemischt, bis eine homogene Mischung entstanden ist. Diese fertige Mischung wird im weiteren als "polymerisierbare Mischung" bezeichnet. Die Photoinitiatoren werden gewöhnlich in Mengen von 0,01 bis 15 %, bevorzugt 0,05 bis 3 % und die Sensibilisatoren in Mengen von 0,001 bis 1,5 %, bevorzugt 0,01 bis 0,5 %, alles bezogen auf das Gesamtgewicht der polymerisierbaren Mischung, eingesetzt.

Zur Herstellung der erfindungsgemäßen Lichtleitfaser kann die polymerisierbare Mischung in eine schlauchförmige Kunststoffhülle (Mantel, Cladding) gefüllt und darin polymerisiert werden (Verfahren A). Man kann das Herstellungsverfahren auch so gestalten, daß die polymerisierbare Mischung zu einem Faden geformt wird, der anschließend mit einer Kunststoffhülle versehen wird (Verfahren B). Schließlich kann die Polymerisation und das Ummanteln mit einer Kunststoffhülle auch gleichzeitig, etwa durch Coextrusion, durchgeführt werden (Verfahren C).

Als Mantelmaterial kann jedes bekannte Material Verwendung finden. Es ist jedoch notwendig, daß das Mantelmaterial einen Brechungsindex besitzt, der um mindestens 1 % kleiner als der des Kernmaterials ist. Beispiele für Polymere, die als Mantelmaterialien verwendet werden können, sind u.a. in GB 1.037.498 beschrieben. Beispielhafte Mantelmaterialien sind: Polytetrafluorethylen, Polyacrylate, Polyfluoracrylate, Polyethylen, Poly-4-methylpenten-1.

Die geschilderten Verfahren, insbesondere das Verfahren A, sind dann problemlos durchzuführen, wenn die polymerisierbare Mischung während der Polymerisation keinen Schrumpf aufweist. Die Frage, ob und gegebenenfalls in welchem Umfang ein Schrumpf auftritt, ist nicht mit Sicherheit vorherzusagen und bedarf orientierender Versuche. Dem Fachmann ist jedoch bekannt, daß er in der Mehrzahl der Fälle mit einem Schrumpf rechnen muß. Dieser Schrumpf führt dazu, daß das Mantelmaterial (Kunststoffschlauch) nicht mehr unmittelbar am Polymerkern anliegt, d.h. den Kern nicht mehr dicht umschließt.

Hierbei können sich im Polymerkern Risse bilden, wobei die den Kern bildende Polymerfaser partiell deformiert wird, d.h. einen unregelmäßigen Querschnitt aufweist. Es ist klar, daß eine solche durch Schrumpf veränderte Lichtleitfaser höchsten optischen Ansprüchen nicht mehr genügen kann.

In der bereits genannten DE-PS 36 25 180 wird zur Vermeidung der schädlichen Auswirkungen des Schrumpfvorganges vorgeschlagen, daß ein Ende des Mantelmaterials (Kunststoffschlauches) in die zu polymerisierende Monomermischung eingetaucht wird, so daß auf diese Weise die Monomermischung dem Schrumpf entsprechend nachfließen kann. Vorzugsweise wird dieses Nachfließen dadurch erreicht, daß der Vorratsbehälter, in den das Ende des Mantelmaterials eintaucht, unter Druck gehalten wird.

Aber sowohl das Nachfüllen unter Druck als auch ein Nachfüllen ohne Anwendung von Druck gestalten sich so schwierig, daß die Qualität der hierbei erhaltenen Lichtleitfasern niedrig ist. So kommt es beim Arbeiten ohne Druck, insbesondere bei höherviskosen Monomermischungen, infolge des Unterdrucks, der durch den polymerisationsbedingten Volumenschrumpf entsteht, zu Rißbildungen und/oder Deformationen des Mantels und damit zwangsläufig auch zu Deformationen des Polymerkerns. Ferner läßt sich das Entstehen von Mikrohohlräumen innerhalb des Polymerkerns nicht vermeiden. Das Arbeiten unter Druck erfordert einen großen technischen Aufwand, da der Druck konstant gehalten werden muß, um Spannungsunterschiede in der entstehenden Polymerfaser zu vermeiden. Dieses Konstanthalten des Druckes ist nur durch ein aufwendig genaues Anpassen des Druckes an den jeweiligen Volumenschrumpf erreichbar.

Es ist nun eine vorteilhafte Variante der erfindungsgemäßen Lichtleitfasern, daß man ihre optische Qualität auf wesentlich einfachere Weise als bislang herstellen kann, wann man als Mantel, in dem das den Polymerkern bildende polymerisierbare Gemisch polymerisiert wird, einen Schrumpfschlauch verwendet (Verfahren D).

Die Erfindung betrifft daher in bevorzugter Weise solche Lichtleitfasern mit einem Schrumpfschlauch als Kunststoffhülle, wobei die Schrumpftemperatur im Bereich von 80 bis 350 °C liegt und wobei der Schrumpfungsgrad 1:1,2 bis 5 beträgt. Weiterhin haben Schrumpfschläuche für solche erfindungsgemäßen Lichtleitfasern eine innere Oberfläche mit einer Rauhigkeit von $<1200$ µm.

Beim Einsatz solcher Schrumpfschläuche für die erfindungsgemäßen Lichtleitfasern kann auf die Verwendung von aufwendigen Vorrichtungen zum Einstellen bestimmter Drücke verzichtet werden, obwohl die polymerisierbaren Gemische vielfach einen Volumenschrumpf aufweisen. Die hierbei erhältliche Lichtleitfaser ist frei von Rissen und zeigt über die gesamte Länge einen gleichmäßigen Durchmesser. Solche Lichtleitfasern haben infolgedessen eine hohe optische Qualität.

Die Schrumpftemperatur der Schrumpfschläuche liegt in bevorzugter Weise im Bereich von 100 bis 220 °C. Der Schrumpfungsgrad beträgt in bevorzugter Weise 1:2 bis 4. Die innere Oberfläche weist in bevorzugter Weise eine Rauhigkeit von $<200$ µm auf. Auch für den Schrumpfschlauch gilt die Forderung, daß sein Brechungsindex um mindestens 1 % kleiner ist als der des Polymerkerns.

Schrumpfschläuche für die erfindungsgemäßen Lichtleitfasern sind bekannt und im Handel erhältliche Produkte. Die für die erfindungsgemäßen Lichtleitfasern verwendbaren Schrumpfschläuche sind in bevorzugter Weise Polymere oder Copolymere folgender Monomerer: Vinylfluorid, Vinylidenfluorid, Tetrafluorethylen, Hexafluorpropylen, Perfluoralkyl-vinylether, Chlorfluorethylen, Ethylen, Propylen, 4-Methylpenten-1, Vinylchlorid und Vinylidenchlorid.

Schlauchförmige Kunststoffhüllen, insbesondere Schrumpfschläuche für die erfindungsgemäßen Lichtleitfasern weisen einen inneren Durchmesser von 0,1 bis 50 mm, bevorzugt 0,5 bis 15 mm, besonders bevorzugt 1 bis 2 mm auf.

Da der Schrumpfschlauch der Lichtleitfaser auch zum Begrenzen des reflektierten Lichtes dient, welches sich durch den Polymerkern fortpflanzt, besteht bezüglich der Wandstärke der schlauchförmigen Kunststoffhülle, insbesondere des Schrumpfschlauches nach dem Schrumpf, dann keine Begrenzung, wenn die Wandstärke wenigstens ein Mehrfaches der Wellenlänge des zu übertragenden Lichtes beträgt. Vielfach beträgt die Wandstärke der eingesetzten Schrumpfschläuche nach dem Schrumpf 50 µ bis 2 mm, bevorzugt 50 bis 500 µ.

Die Herstellung der bevorzugten Lichtleitfasern wird in der Weise vorgenommen, daß man den Schrumpfschlauch mit dem polymerisierbaren Gemisch füllt, die Polymerisation durch Bestrahlen initiiert und gegebenenfalls durch anschließendes Tempern vervollständigt und danach oder bereits während der Polymerisation die Schrumpfung des Schrumpfschlauches vornimmt.

In bevorzugter Weise wird der mit dem polymerisierbaren Gemisch gefüllte Schrumpfschlauch kontinuierlich einoder mehrmalig durch eine Heizvorrichtung hindurchgeführt, die nur eine kurze Strecke des Schrumpfschlauches bedeckt, so daß auf diese Weise die Polymerisation und die Schrumpfung zonenweise vorgenommen werden. Die Polymerisation kann hierbei photochemisch bei einer solchen Temperatur initiiert werden, die zur Schrumpfung des Schrumpfschlauches führt. Die Polymerisation kann jedoch photochemisch auch bei einer tieferen Temperatur als der Schrumpftemperatur initiiert werden, wobei man

die Schrumpfung anschließend vornimmt. Die zur Schrumpfung benötigte Wärmemenge kann durch eine externe Wärmequelle, wie einen Ringofen zugeführt werden, sie kann aber auch in kombinierter Weise durch eine externe Wärmeqelle und die Polymerisationswärme erreicht werden.

Eine weitere vorteilhafte Ausführungsform der Herstellung der erfindungsgemäßen Lichtleitfasern besteht darin, daß die Polymerisation des sich im schlauchförmigen Mantel befindlichen polymerisierbaren Gemisches photochemisch lediglich induziert wird, eine Temperung zur weiteren Durchführung und Beendigung der Polymerisation jedoch zunächst nicht vorgenommen wird. Solche lediglich gestarteten polymerisierbaren Gemische haben eine Topfzeit bei Raumtemperatur von einigen Minuten bis zu einigen Stunden. Die sich im schlauchförmigen Mantel befindlichen polymerisierbaren Gemische lassen sich nach der Induktion zunächst in jede beliebige gewünschte Form bringen, die auch Formen umfaßt, bei denen der gefüllte Schlauch um Radien <1 cm gebogen werden muß. Nach dieser Formgebung kann die Polymerisation in der beschriebenen Weise beendet werden. Die Vorteile der erfindungsgemäßen Lichtleitfasern werden deutlich, wenn man Lichtleitfasern gemäß der genannten DE-PS 36 25 180 vergleicht, die bereits brechen, wenn sie um Radien <5 cm gebogen werden.

Zum Befüllen des schlauchförmigen Mantels, in bevorzugter Weise des Schrumpfschlauches, wird der Mantel beispielsweise mit einem Ende in das polymerisierbare Monomergemisch eingetaucht. Sodann wird an das andere Ende ein geeignetes Vakuum angelegt und das polymerisierbare Gemisch in den Schlauch gesaugt. Gemäß einer anderen Arbeitsweise kann das polymerisierbare Gemisch auch in den schlauchförmigen Mantel, bevorzugt in den Schrumpfschlauch, durch eine Pumpe eingepreßt werden. Hierzu wird eine Düse mit geeignetem Durchmesser eingesetzt. Solche Fülltechniken sind dem Fachmann bekannt. Nach dem Befüllen des schlauchförmigen Mantels wird ein Ende oder werden beide Enden des Mantels verschlossen. Danach wird der gefüllte schlauchförmige Mantel den Polymerisationsbedingungen und im Falle eines Schrumpfschlauches den Schrumpfbedingungen ausgesetzt.

Die beigefügten Figuren 1 und 2 zeigen beispielhafte apparative Anordnungen zur Herstellung der erfindungsgemäßen Lichtleitfasern. So wird gemäß Figur 1 ein mit dem polymerisierbaren Gemisch gefüllter schlauchförmiger Mantel, in bevorzugter Weise ein Schrumpfschlauch, von einer Vorratsrolle 1 durch eine Belichtungsanlage 3 geführt. Nach Durchlaufen dieser Belichtungsanlage, in der die lichtinduzierte Polymerisation stattfindet oder initiiert wird, durchläuft der Schlauch einen auf die gewünschte Schrumpftemperatur erhitzten Ofen 4. Anschließend an den Ofen 4 wird die Lichtleitfaser auf die Aufnahmerolle 2 geführt. Die Belichtungsanlage ist zum Aussenden energierreicher Strahlung, beispielsweise von UV-Strahlung, ausgestattet. Gemäß Figur 2, in der gleiche Zahlenbezeichnungen für die bereits beschriebenen Apparateteile stehen, wird die polymerisierte und im Mantel geschrumpfte Lichtleitfaser zusätzlich durch einen Ofen 5 gezogen, in dem eine thermische Nachbehandlung (Tempern) vorgenommen wird. Die Öfen 4 und 5 und die Belichtungsanlage 3 sind vorzugsweise als Ringöfen bzw. Ringbelichtungsanlagen ausgestaltet. Die thermische Nachbehandlung dient vor allem der Beseitigung von Spannungen im Polymerkern; sie kann gegebenenfalls auch nach vollständigem Aufrollen der Lichtleitfaser auf die Aufnahmerolle 2 in einem separaten Ofen erfolgen.

Die Geschwindigkeit, mit der die mit der polymerisierbaren Mischung oder mit einem bereits polymerisierten Material gefüllten Schrumpfschläuche durch die Öfen bzw. durch die Belichtungsanlage geführt werden, ist abhängig von der Reaktivität des polymerisierbaren Gemisches, von der Reaktivität des Photoinitiators, vom Einfluß des gegebenenfalls mitverwendeten Sensibilisators, von der Temperatur bzw. der Energie der verwendeten Strahlung und von der Art des schrumpffähigen Materials. Diese und andere Einflußgrößen und ihre Wirkung sind dem Fachmann bekannt. Ihr Ausmaß kann durch einfache Vorversuche bestimmt werden.

Bei wenig oder gar nicht schrumpfenden polymerisierbaren Gemischen kann das oben beschriebene Verfahren auch mit nicht schrumpffähigen Mantelmaterialien gemäß Verfahren A durchgeführt werden.

Beispiele 1 bis 10 und Vergleichsbeispiele 1 und 2

Allgemeines

Schrumpfschlauch-Material:

Als Mantelmaterial diente ein Schrumpfschlauch aus einem fluorierten Ethylen-Propylen-Copolymer (FEP) (Handelsprodukt der Fa. Isofluor): Schrumpfrate 1,3:1; Innendurchmesser 2,34 mm; Wandstärke nach Schrumpfung - 0,23 mm; Brechungsindex 1,33 bei 20 ° C, Rauhigkeit der inneren Oberfläche <200 µm.

Die Epoxygruppen aufweisenden Verbindungen wurden unter Reinraumbedingungen über ein Polyamid-Filter der Fa. Sartorius (PorengröOe 0,2 µm) oder über ein Durapore-Filter der Fa. Millipore (Porengröße

0,2 µm) filtriert. Die destillierbaren Epoxygruppen aufweisenden Verbindungen wurden vor dem Filtrieren im Hochvakuum destilliert.

Füllen des Schrumpfschlauches:

Die polymerisierbaren Monomermischungen wurden mittels einer Kolben-Zylinder-Apparatur in den Schrumpfschlauch gepreßt.

Polymerisation:

Die Polymerisation wurde bei Raumtemperatur UV-strahlenchemisch induziert. Als Strahlenquelle 3 (Fig. 1 bzw. 2) dienten 10 Leuchtstoffröhren vom Typ TL 8W/08; F8T5 BLB der Fa. Philips. Der Abstand der Leuchtstoffröhren vom Schrumpfschlauch betrug 4 cm. Der Ringofen 4 (Fig. 1 bzw. 2) wurde auf 150 °C geheizt.

Dämpfungsmessung:

Die Dämpfungsmessung erfolgte nach der CUT-OFF-Methode: Es wurde mit Hilfe eines HeNe-Lasers und einer Fokussieroptik Licht in einen Lichtwellenleiter (LWL) eingekoppelt und am Ende des LWL die transmittierte Intensität zuerst an dem nicht gekürzten Stück gemessen. Nach mehrmaliger definierter Längenkürzung erfolgten weitere Messungen.

Aus diesen Daten wurde nach der Formel

Dämpfung [dB] = $10 \log_{10} (I_{kurz}/I_{lang})$

die Dämpfung berechnet, Diese Dämpfungswerte liegen, gegen die Länge aufgetragen, auf einer Gerade, deren Steigung die spezifische Dämpfung ergibt.

Als Fotokatalysatoren wurden die handelsüblichen, nämlich Cyracure UVI 6974 (P 1):

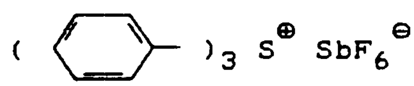

Cyracure UVI 6990 (P 2):

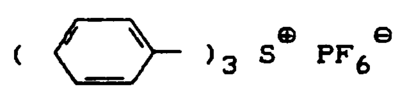

der Union Carbide Corporation und
Degacure KI 85 (P 3)

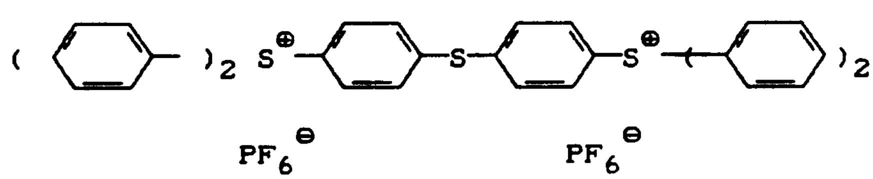

der Degussa AG verwendet.

Als Epoxygruppen aufweisende Siloxane wurden folgende der Formeln

S 1: $M_2D^*_{10}$

S 2: $M_2D^*_4$

S 3: $D_{15}M^*_2$

verwendet, wobei

$M = (CH_3)_3Si-O_{0,5}$ (1 O-Atom für 2 Endgruppen)

$D = (CH_3)_2-Si-O$

$M^*$ = 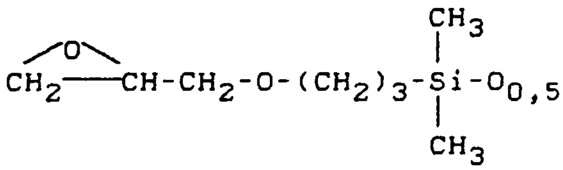 (1 O-Atom für 2 Endgruppen)

$D^*$ = 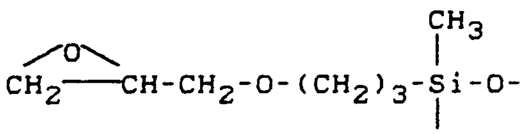

bedeuten.

Ausführliche Formeln sind beispielsweise:

$M_2D^*_{10}$:

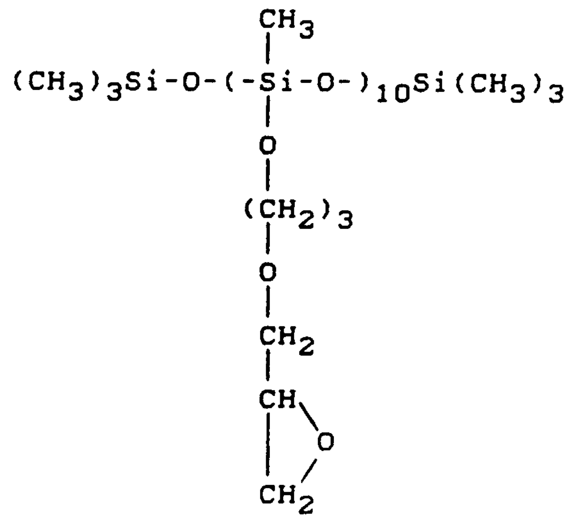

$D_{15}M^*_2$:

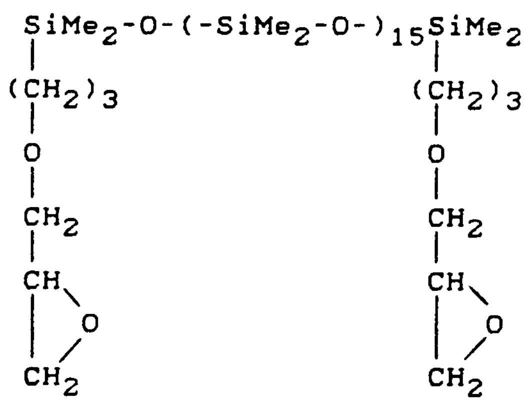

Als Epoxygruppen enthaltende Comonomere wurden folgende verwendet:
C1: Degacure K126 der Degussa AG

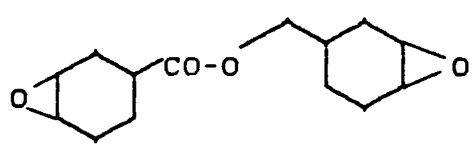

und
C2: Cyracure UVR 6200 der Union Carbide (Cycloaliphatisches Epoxid).

| Folgende polymerisierbare Mischungen wurden hergestellt (Angaben in Gew.-%): | | | | | | | | |
|---|---|---|---|---|---|---|---|---|
| Beispiel | S1 | S2 | S3 | C1 | C2 | P1 | P2 | P3 |
| 1 | 99,9 | | | | | 0,1 | | |
| 2 | 69,9 | | | 30 | | 0,1 | | |
| 3 | 99,9 | | | | | | 0,1 | |
| 4 | 50,0 | | | 49,9 | | | 0,1 | |
| 5 | 59,9 | | | 30 | 10 | 0,1 | | |
| 6 | | 99,9 | | | | | | 0,1 |
| 7 | | | 99,9 | | | 0,1 | | |
| 8 | | 69,9 | | 30 | | | 0,1 | |
| 9 | | | 69,9 | | 30 | 0,1 | | |
| 10 | 50 | 24,9 | | 25 | | 0,1 | | |

Vergleichsbeispiel 1 ist ein Polycarbonatlichtleiter Optipol® Faser 100 der Bayer AG.

Vergleichsbeispiel 2 ist ein Poly-methylmethacrylat (PMMA)-Lichtleiter Typ Eska Extra von Mitsubishi Rayon.

Folgende Werte wurden erhalten:

| Beispiel | Dämpfung (dB/km) | Dämpfung nach 5 h Temperung bei 150 °C (dB/km) |
|---|---|---|
| 1 | 800 | 1100 |
| 2 | 860 | 1250 |
| 3 | 820 | 1100 |
| 4 | 1050 | 1310 |
| 5 | 1460 | 1510 |
| 6 | 1700 | 1750 |
| 7 | 2500 | 2850 |
| 8 | 3100 | 3600 |
| 9 | 1760 | 2010 |
| 10 | 2850 | 3000 |
| Vgl. 1 | 1900 | >100.000 |
| Vgl. 2 | 200 | >100.000 |

**Patentansprüche**

1. Lichtleitfaser mit einer schlauchförmigen Kunststoffhülle und einem Kern aus einem Polymer, dessen Brechungsindex mindestens 1 % größer ist als der des Hüllenmaterials und der aus einer polymerisierbaren Mischung erhalten wird, dadurch gekennzeichnet, daß die polymerisierbare Mischung aus Epoxygruppen aufweisenden Verbindungen besteht, von denen mindestens 10 Gew.-%, bevorzugt mindestens 50 Gew.-%, besonders bevorzugt mindestens 80 Gew.-% Epoxygruppen aufweisende Siloxane sind.

2. Verfahren zur Herstellung einer Lichtleitfaser nach Anspruch 1, dadurch gekennzeichnet, daß die polymerisierbare Mischung in die schlauchförmige Kunststoffhülle gefüllt und darin polymerisiert wird.

3. Lichtleitfaser nach Anspruch 1, dadurch gekennzeichnet, daß die Epoxygruppen aufweisenden Verbindungen teilweise durch mit dem Epoxid copolymerisierbare, Hydroxylgruppen aufweisende Verbindungen ersetzt sind.

4. Lichtleitfaser nach Anspruch 1, dadurch gekennzeichnet, daß die schlauchförmige Kunststoffhülle einen inneren Durchmesser von 0,1 bis 50 mm hat und eine Wandstärke aufweist, die mindestens ein mehrfaches der Wellenlänge des zu übertragenden Lichtes beträgt.

5. Lichtleitfaser nach Anspruch 1, dadurch gekennzeichnet, daß als schlauchförmige Kunststoffhülle ein Schrumpfschlauch eingesetzt wird, dessen Schrumpftemperatur im Bereich 80 bis 350 °C liegt, dessen

Schrumpfungsgrad 1:1,2 bis 5 beträgt und dessen innere Oberfläche eine Rauhigkeit von <1200 µm aufweist.

**6.** Lichtleitfaser nach Anspruch 5, dadurch gekennzeichnet, daß die Schrumpftemperatur im Bereich 100 bis 220 ° C liegt.

**7.** Lichtleitfaser nach Anspruch 5, dadurch gekennzeichnet, daß der Schrumpfungsgrad 1:2 bis 4 beträgt.

**8.** Lichtleitfaser nach Anspruch 5, dadurch gekennzeichnet, daß die Rauhigkeit <200 µm beträgt.

**9.** Lichtleitfaser nach Anspruch 1, dadurch gekennzeichnet, daß die Polymerisation des polymerisierbaren Gemisch photochemisch lediglich imitiiert wird, dann die gewünschte Form der Lichtleitfaser hergestellt wird und danach die Polymerisation beendet wird.

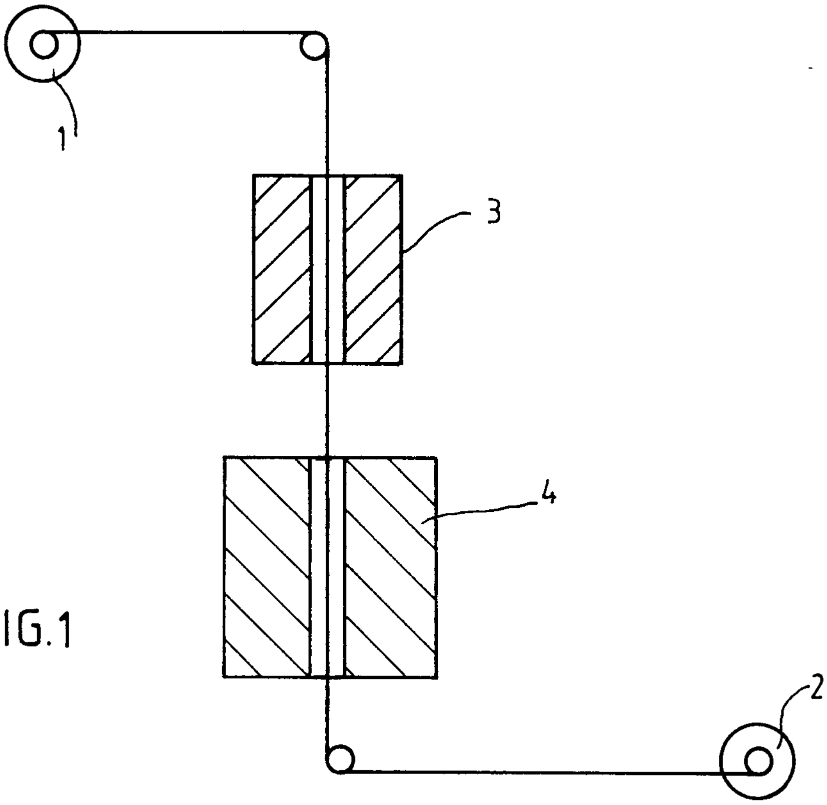


FIG.1

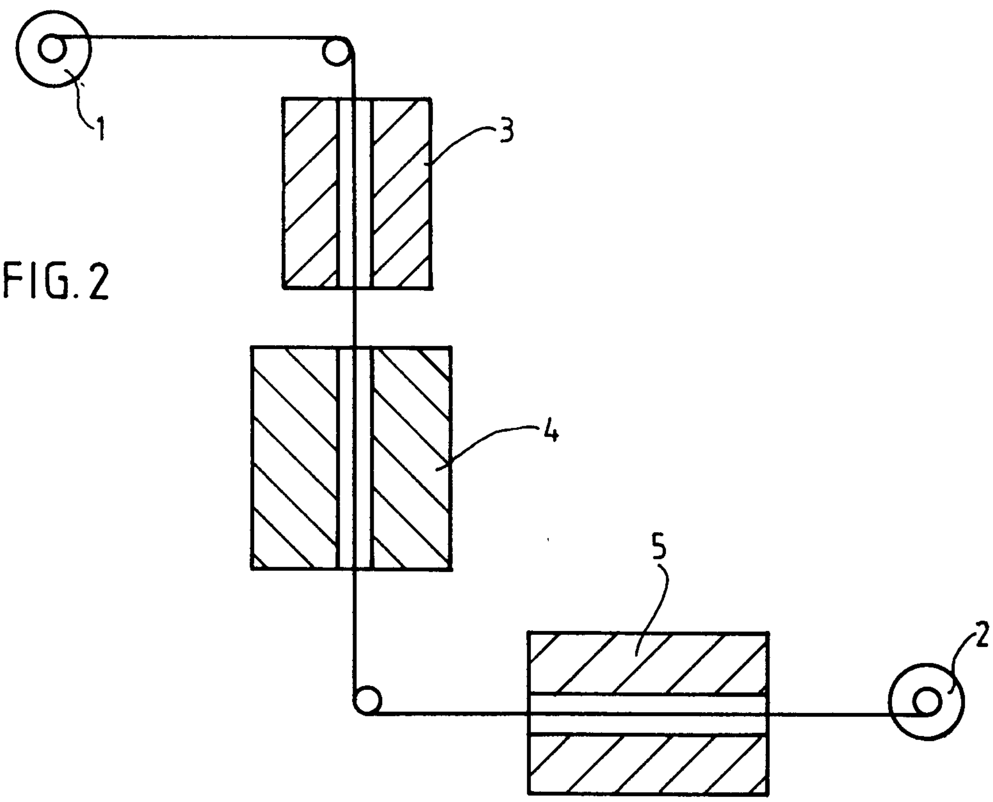


FIG.2

Europäisches Patentamt

# EUROPÄISCHER RECHERCHENBERICHT

Nummer der Anmeldung

EP 92100481.8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 5) |
|---|---|---|---|
| D,Y | DE - C - 3 625 180 (KUREHA KAGAKU KOGYO K.K.) * Patentansprüche 1,3-7; Seite 4, Zeilen 17-21 * -- | 1,2,4 | G 02 B 1/04<br>G 02 B 6/16<br>C 08 G 77/14 |
| D,Y | US - A - 4 576 999 (ECKBERG) * Zusammenfassung; Spalte 8, Zeile 55 - Spalte 9, Zeile 24 * -- | 1,3,9 | |
| A | US - A - 4 788 268 (LAU et al.) * Zusammenfassung * ---- | | |

RECHERCHIERTE SACHGEBIETE (Int. Cl 5)

G 02 B
C 08 G 77/00
C 08 L 83/00
B 29 D

Der vorliegende Recherchenbericht wurde für alle Patentansprüche erstellt.

| Recherchenort | Abschlußdatum der Recherche | Prüfer |
|---|---|---|
| WIEN | 06-05-1992 | HAUSWIRTH |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82